(19) **Europäisches Patentamt**
**European Patent Office**
**Office européen des brevets**

(11) **EP 0 477 632 B1**

(12) **EUROPÄISCHE PATENTSCHRIFT**

(45) Veröffentlichungstag und Bekanntmachung des Hinweises auf die Patenterteilung:
**13.11.1996 Patentblatt 1996/46**

(51) Int Cl.⁶: **H04N 7/24**, H04N 7/00, H04N 7/12

(21) Anmeldenummer: **91115146.2**

(22) Anmeldetag: **07.09.1991**

(54) **Verfahren zur Bandaufspaltung eines mit einer Grundabtastfrequenz abgetasteten Signals in einem Sender und zur Zusammenführung in einem Empfänger**

Method for the bandsplitting of a signal being sampled with a fundamental sampling frequency in a transmitter and for bringing the bands together in a receiver

Procédé pour la division en bandes d'un signal étant échantillonné avec une fréquence d'échantillonnage fondamentale dans un émetteur et pour recombiner les bandes dans un récepteur

(84) Benannte Vertragsstaaten:
**DE FR GB IT**

(30) Priorität: **14.09.1990 DE 4029189**

(43) Veröffentlichungstag der Anmeldung:
**01.04.1992 Patentblatt 1992/14**

(73) Patentinhaber: **Interessengemeinschaft für Rundfunkschutzrechte GmbH Schutzrechtsverwertung & Co. KG.
D-40210 Düsseldorf (DE)**

(72) Erfinder:
• **Herfet, Thorsten, Dipl.-Ing.
W-4690 Herne 2 (DE)**
• **Stracke, Jürgen, Dipl.-Ing.
W-8500 Nürnberg 1 (DE)**

(74) Vertreter: **Eichstädt, Alfred, Dipl.-Ing.
Maryniok & Partner,
Kuhbergstrasse 23
96317 Kronach (DE)**

(56) Entgegenhaltungen:
EP-A- 0 306 071     EP-A- 0 359 094
WO-A-90/06655      GB-A- 2 138 238

• **Proceedings of the Third International Workshop on HDTV; Turin, It, 30th August 1st September, 1989; P. J. TOURTIER :' A COMPATIBLE APPRAOCH ON DIGITAL HDTV CODING BASED ON SUBBAND TECHNIQUES'**
• **RUNDFUNKTECHNISCHE MITTEILUNGEN Bd. 34, Nr. 3, 1990, NORDERSTEDT, DE Seiten 110 - 125 , XP137673 ANDREAS EBNER 'DIE ENTWICKLUNG DES I-PAL-M-VERFAHRENS UND DESSEN EINBINDUNG IN DAS PAL-PLUS-SYSTEM'**
• **IEEE TRANSACTIONS ON ACOUSTICS, SPEECH, AND SIGNAL PROCESSING Bd. 38, Nr. 8, August 1990, NEW YORK, US Seiten 1446 - 1456 , XP148387 MARK J. T. SMITH ET AL. 'Analysis/Synthesis Techniques for Subband Image Coding'**

**Beschreibung**

Die Erfindung betrifft ein Verfahren zum Bandaufspalten eines in einem Sender mit einer Grundabtastfrequenz abgetasteten Signals und zum Zusammenführen in einem Empfänger sowie eine Sende- und eine Empfängerschaltung zur Durchführung des Verfahrens.

Aus der DE 38 34 188 A1 ist ein Verfahren zur Bandaufspaltung bekannt. Derartige Verfahren werden zur symmetrischen Aufspaltung von Signalen eingesetzt und weisen Filter auf, die aus komplementären Tiefpaß- und Hochpaßfiltern zum Aufteilen in zwei Frequenzbänder und wenigstens einer weiteren Filteranordnung zum Zusammenfügen der beiden Frequenzbänder bestehen. Die erste Filteranordnung umfaßt einen Coder mit einer Abtasthalbierung und die zweite Filteranordnung einen Decoder mit einer Abtastratenverdoppelung. Beide symmetrischen Filteranordnungen ergänzen sich derart, daß das Ausgangssignal dem Eingangssignal entspricht. Die Filteranordnungen können dabei mehrstufig ausgebildet sein. Die Filter sind so aufgebaut, daß keine Fehler durch die Abtastratenreduzierung auftreten, wenn die Tiefpaß- und Hochpaßübertragung fehlerfrei ist. Solche Filter sind z. B. Quadrature-Mirror-Filter (QMF-Filter), Conjugate-Quadrature-Filter, nicht rekursive Wellendigitalfilter oder Lattice-Quadrature-Mirrorfilter sowie Brücken-Wellendigitalfilter.

In der älteren europäischen Patentanmeldung EP-A-430 202 (art 54(3) EPü) ist ein Sender zur Erzeugung von Videosignalen unterschiedlicher Bildbreiten- zu Bildhöhen-Verhältnisse sowie ein Empfänger zur kompatiblen Darstellung der Videosignale mit Fernsehempfängern mit 16:9 und 4:3-Bildröhren vorgeschlagen worden, bei dem die Übertragung der Signale nach dem sog. Letterbox-Verfahren erfolgt, wobei im mittleren Teil des Bildes vertikal-niederfrequente Signale und in am oberen und unteren Bildrand liegenden Zeilen vertikal-höherfrequente Signale übertragen werden. Die Signale werden dabei in einem Diagonalfilter, das in Richtung horizontaler und vertikaler Frequenzen wirkt, gefiltert und in einem Offset-Modulator zur Offset-Modulation des Ausgangssignals unterzogen und miteinander verschachtelt über einen Kanal übertragen. Das empfangene Signal wird wiederum aufgespalten und nach der Filterung und Summierung zu einem Signal mit dem Originalvideospektrum nach der Offset-Demodulation und nach Durchlaufen eines Diagonalfilters auf einem Bildschirm entweder mit erhöhter vertikaler Zeilenzahl oder niedriger Zeilenzahl dargestellt.

Weiterhin ist aus der EP 0 081 223 A2 ein Verfahren zur Übertragung von digitalen Farbbildsignalen bekannt, bei dem senderseitig die Abtastfrequenz um ein ganzzahliges Vielfaches erhöht wird, nach der A/D-Umsetzung ein digitales Filter vorgesehen ist, das Störungen aussiebt, bei dem nur die ursprüngliche Abtastrate übertragen wird und empfangsseitig durch Erhöhung der Abtastrate und unter Verwendung eines weiteren digitalen Filters Störungen durch einen digitalen D/A-Umsetzer beseitigt werden. Dieses Verfahren ist für den Einsatz in allen Fernsehnormen angegeben.

Der Erfindung liegt die Aufgabe zugrunde, ein Verfahren zur Übertragung eines mit einer Grundabtastfrequenz abgetasteten Signals in senderseitig durch Aufspaltung des Eingangssignalspektrums gewonnenen und empfängerseitig wieder zusammengeführten Frequenzbändern anzugeben, mit dem eine Bandaufspaltung möglich ist, um Signale über unterschiedlich bandbegrenzte Kanäle übertragen und empfängerseitig wieder zusammenführen zu können. Ferner sollen zur Durchführung der sender- und empfängerseitigen Verfahrensschritte hierfür geeignete Sender und Empfänger angegeben werden, insbesondere für den Einsatz zur kompatiblen Übertragung von Videosignalen, z. B. solchen zum kompatiblen Übertragen und Darstellen von PAL-Signalen im Seitenverhältnis 16:9 mittels eines Bildschirms mit gleichen Seitenverhältnissen oder auf einem Bildschirm mit einem Bildseitenverhältnis 4:3 durch Anwendung des Letterbox-Verfahrens.

Die Aufgabe wird durch die im Anspruch 1 angegebenen Verfahrensschritte gelöst sowie durch die im Anspruch 5 ff angegebenen geeigneten Ausbildungen von Sendern und Empfängern zur Durchführung des Verfahrens.

Das erfindungsgemäße Verfahren gibt eine Vor- und Nachfilterung für die Bandaufspaltung und die fehlerfreie Zusammenfügung der Bänder an. Für die Vor- und Nachfilterung in Aufspaltungszweigen eignen sich besonders linearphasige, digitale Filter (FIR-Filter), um eine aliasfreie Rekonstruktion des Ausgangsspektrums für eine beliebige Bandaufspaltung im angegebenen Verhältnis zu ermöglichen. Das erfindungsgemäße Verfahren ist für die Übertragung eines breitbandigen Signals über bandbegrenzte Kanäle, z. B. für die Tonübertragung, über Telefonnetze, Bildübertragung über begrenzte Datenkanäle einsetzbar, und zwar gegenüber dem Stand der Technik auch dann, wenn Bänder nicht gleich groß sind, also asymmetrisch sind. Die Kanäle können somit unterschiedliche Bandbreiten aufweisen, wodurch mehr Übertragungskapazität zur Verfügung steht.

Die angegebene Unterabtastung und Überabtastung beliebiger Signale, also das Weglassen von Abtastwerten, ist eine zeitvariante Operation, die mit Hilfe der Fouriertransformation als eine Modulation mit geeigneten Cosinusfunktionen darstellbar ist. Eine M-fache Unterabtastung mit anschließender Auffüllung der Abtastfolge mit (M-1) Nullen kann als Modulation nach der aus der digitalen Signalverarbeitung bekannten nachfolgend angegebenen Gleichung ausgedrückt werden.

$$\xi(iT) = \sum_{n=0}^{M-1} \frac{1}{M} \cdot s(iT) \cdot \cos\left(2\pi \cdot \frac{n}{M} \cdot f_s \cdot iT\right).$$

dabei bedeuten:

$\xi(iT) =$      die aus der Abtastung entstehende Abtastfolge

$(iT) =$      ein ganzzahliges Vielfaches des Abtastzeitintervalls

$f_s =$      die Grundabtastfrequenz des Eingangssignals

$s(iT) =$      der abgetastete Signalwert (Amplitudenprobe)

$i =$      ganzzahlige Laufvariable, im Prinzip t

$n =$      eine Summationslaufvariable, die mit ihrem Gültigkeitsbereich die Anzahl der benötigten Summenterme festlegt.

$$T = \frac{1}{f_s} = \text{Abtastzeitintervall}$$

Das erfindungsgemäße Verfahren gibt unter Verwendung bekannter Unter- und Überabtastbedingungen ganz allgemein an, wie ein abgetastetes Signal senderseitig aufzuspalten ist, um nach der Rekonstruktion auf der Empfängerseite als alias- und phasenfehlerfreie Rekonstruktion wieder zur Verfügung zu stehen, wobei die Signale über bandbegrenzte asymmetrische Kanäle übertragbar sind. Die hierfür als besonders geeignet vorgeschlagenen FIR-Filter sind als Quadrature-Mirror-Filter (QMF) bekannt. Um eine Bandaufspaltung in dem im Anspruch 1 angegebenen Verhältnis zu erreichen, wird zunächst eine Abtastratenkonversion (Up- und Downsampling mit Interpolationsfilterung) auf das M · N-fache der ursprünglichen Abtastfrequenz vorgenommen. Durch die vorgenommene Abtastratenkonversion wird, anstatt eines spiegelsymmetrischen Tiefpaß-Hochpaß-Paares nach den bekannten Verfahren, ein Tiefpaß-Bandpaß-Paar eingesetzt, das die im Anspruch 1 angegebenen Bedingungen erfüllt. Die beiden Filter auf der Empfängerseite müssen dabei die gleichen Eigenschaften aufweisen, wie die Filter auf der Senderseite. Bei der Realisierung der Filter mit gerader Koeffizientenzahl ist es jedoch erforderlich, sich um den Faktor -1 voneinander unterscheidende Bandpässe im Bandpaßzweig einzusetzen. Sind die Signale auf dem Kanal bezüglich der ursprünglichen Abtastfrequenz aliasfrei, so ist mit den Filtern auf der Empfängerseite ebenfalls eine alias- und phasenfehlerfreie Rekonstruktion des Ausgangsspektrums gewährleistet. Die Güte der Rekonstruktion wird dabei durch die Amplitudenabweichung der Signale in den Kanälen und durch die Abtastratenkonversion (Güte der Interpolationsfilter) bestimmt. Mit einer solchen Vor- und Nachfilterung ist z. B. eine kompatible Übertragung von Signalen für unterschiedlich auflösende Endgeräte, wie Fernsehwiedergabegeräte, möglich. Die Erfindung sieht deshalb die Verwendung des Verfahrens für die Wiedergabe von mittels eines Videosignalgenerators, z. B. einer Kamera, aufgenommenen Bildern mit einem Seitenverhältnis 16:9 zur kompatiblen Wiedergabe auf einem Bildschirm mit einem Seitenverhältnis von 4:3 explizit im Anspruch 5 vor. Unter Beachtung des bekannten Letterbox-Verfahrens, bei dem bei der kompatiblen 16:9-Übertragung die gesamte Breitbildvorlage in das herkömmliche 4:3 Format eingelagert wird, sind nach dem erfindungsgemäßen Verfahren Filter eingesetzt, die ein Verhältnis M:N von 3:1 aufweisen. Die maximale Amplitudenabweichung der Signale in den Kanälen sollte dabei nicht größer als 0,3 dB sein, wobei die Abweichung mit Hilfe von Optimierverfahren verbessert werden kann. Bei dem Letterbox-Verfahren wird das 16:9-PAL-Bild mit 432 aktiven Zeilen auf dem Empfänger mit Standardformat wiedergegeben. Es wird dabei also nicht die gesamte Höhe des Bildschirmes ausgenutzt, sondern im oberen und unteren Rand des Empfängers verbleiben schwarze Streifen. Um die ursprüngliche Vertikalauflösung von 576 aktiven Zeilen beim PAL-Verfahren empfängerseitig herstellen zu können, sieht das Letterbox-Verfahren die Übertragung zusätzlicher Informationen an einen Empfänger mit 16:9 Format vor. Um die Zusatzinformation für das Standardgerät (4:3) unsichtbar zu machen, kann man das Signal mit entsprechend reduzierter Amplitude zwischen Schwarzwert und Synchronpegel übertragen oder nachträglich empfangsseitig begrenzen. Bekanntlich weist das Letterbox-Verfahren den Nachteil auf, daß die Vertikalauflösung bei kompatiblen Bild um den Faktor 3:4 verringert wird. Zudem kann es bei nicht korrekt eingestelltem Helligkeitspegel zu Störungen durch das unterlagerte Zusatzsignal in den Bildstreifen kommen. Andererseits besteht ein wesentlicher Vorteil darin, daß auch der kompatible Empfänger die gesamte Bildinformation wiedergibt, dem Betrachter also keinerlei bildwichtige Handlung verlorengeht. Die Geometrie des Empfängers mit dem 16:9 Bildseitenverhältnis und des kompatiblen Empfängers mit dem 4:3 Bildverhältnis ist automatisch korrekt, da die gesamte Bildinformation in horizontaler Richtung pro Zeile in $52 \cdot 10^{-6}$ Sekunden zur Verfügung steht. Um beim Breitbildempfänger (16:9) dieselbe horizontale Ortsauflösung zu erreichen, wie man sie beim Standardgerät von 4:3 Bildern gewohnt ist, wird eine um den Faktor 4:3 gegenüber dem Standardbild erhöhte Übertragungsbandbreite benötigt, deren Übertragungsrealisierung das angegebene Verfahren ebenfalls sicherstellt.

Weitere vorteilhafte Verfahrensschritte, insbesondere in bezug auf die kompatible Videosignalübertragung von Signalen für die Darstellung unterschiedlichen Bildformates, sind in den Unteransprüchen 2 bis 4 angegeben.

Schaltungsanordnungen zur Durchführung des Verfahrens sind in den Ansprüchen 5 ff im einzelnen für Sender und Empfänger angegeben.

Grundsätzlich kann das über den Tiefpaßzweig senderseitig unterabgetastete Signal mit einer Trägerfrequenz moduliert übertragen und von einem Standardempfänger 4:3 empfangen werden. Da die Signale senderseitig nicht mehr zusammengeführt und miteinander verschachtelt werden, wird dieses ermöglicht, so daß ohne zusätzlichen Filterungsaufwand mit herkömmlichen Empfängern im Breitbildformat aufgenommene und übertragene Sendungen empfangen und dargestellt werden. Zur Darstellung eines 16:9-Bildes mit einem entsprechenden Empfänger ist es hingegen erforderlich, daß dieser Empfänger nach dem erfinderischen Verfahren und den angegebenen Schaltungsanordnungen die Signale, die über die unterschiedlichen bandbegrenzten Kanäle empfangen werden, zusammenführt und das Originalspektrum rekonstruiert.

Jeder der beiden Zweige einer Schaltungsanordnung zur Durchführung des Verfahrens kann wiederum in beliebig viele unterteilt werden, d.h. im Bedarfsfall kann die Schaltung kaskadiert werden. Ebenso ist eine Aufspaltung in mehrere Tiefpaß- und Bandpaßzweige möglich, wenn dieses erforderlich ist. Da üblicherweise nur eine Bandaufspaltung für die Übertragung in zwei Kanälen erforderlich ist, sind die vorteilhaften Schaltungsbeispiele bezogen auf die Bandaufspaltung der Videosignale für eine kompatible Übertragung von Videosignalen für die Darstellung von Seitenverhältnissen von 16:9 auf herkömmlichen Empfängern explizit angegeben.

Das erfindungsgemäße Verfahren hat gegenüber dem Stand der Technik weiterhin den Vorteil, daß damit auch Quadratur-Spiegel-Filter mit ungeraden Koeffizienten (Z) realisierbar sind, wenn in der angegebenen Art und Weise in den beiden Zweigen Verzögerungsleitungen eingesetzt sind. Um ein Originalspektrum wieder empfängerseitig zusammenführen zu können, muß das Nutzsignal möglichst zu 1 addiert und der entstehende Alias durch nichtideale Filter ausgelöscht werden. Dies ist auf einfachste Weise dadurch möglich, daß man die Abtastwerte eines Signalzweigs einer Phasenverschiebung von 180° gegenüber der Phasenlage der Abtastwerte des anderen Signalzweigs unterwirft, was bei der Addition der Abtastwerte beider Signalzweige zur Auslöschung der Aliaseffekte führt. Die Eigenschaften eines Quadratur-Spiegel-Filters sind hierdurch realisiert. Wird ein Filter mit geraden Koeffizienten realisiert, so ist die phasenfreie und aliasfreie Rekonstruktion des Signals automatisch erfüllt, weil diese Filter eine Übertragungsfunktion mit entweder einer Sinus- oder einer Cosinusfunktion haben, so daß der Alias in dem einen Zweig stets negativ und im anderen Zweig stets positiv ist. Da diese Drehung bei ungerader Koeffizientenzahl der Filter nicht gegeben ist, sind die angegebenen Verzögerungsleitungen zur Umdrehung des Alias in dem einen Zweig notwendig.

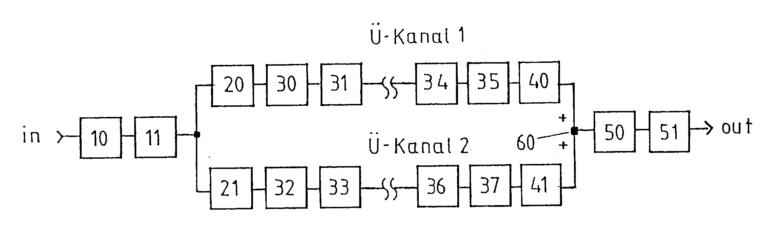

Die Erfindung wird nachfolgend unter Verweis auf das in der Zeichnung dargestellte Blockschaltbild anhand von Ausführungsbeispielen näher erläutert.

In dem Blockschaltbild zeigen:

Block 10 eine Überabtastschaltung in Form eines Interpolators, diesem schließt sich ein interpolierender Tiefpaß 11 an. Nach dem Tiefpaß 11 erfolgt die Bandaufspaltung mittels der ersten Filteranordnung aus einem vorzugsweise modifizierten QMF-Tiefpaßfilter 20 und einem modifizierten QMF-Bandpaßfilter 21. Dem Tiefpaßfilter 20 ist eine Verzögerungsleitung 30 nachgeschaltet. Zur Unterabtastung ist als Unterabtastschaltung ein Dezimator 31 vorgesehen, dem sich nicht dargestellte Modulationsstufen eines Senders anschließen, um das so gewonnene Spektrum über den bandbegrenzten Kanal zu übertragen.

In dem zweiten Übertragungskanal ist eine Verzögerungsleitung 32 vorgesehen, die dem Bandpaßfilter 21 nachgeschaltet ist. Mit einem weiterhin vorgesehenen Dezimator 33 wird das Signal unterabgetastet. Ebenfalls nicht dargestellt sind auch in diesem Kanal die notwendigen Modulationseinrichtungen für die Modulation des Spektrums mit einer Trägerfrequenz zur Übertragung über den bandbegrenzten zweiten Kanal. Die Aufteilung des mit der Grundfrequenz abgetasteten und sodann konvertierten Signals durch Überabtastung erfolgt dabei asymmetrisch durch die beiden Filterzweige.

Auf der Empfangsseite wird das empfangene und demodulierte Signal des ersten Übertragungskanals einem Interpolator 34 zugeführt, in dem das unterabgetastete Signal wieder überabgetastet wird. Dieser Interpolator 34 ist mit dem die Unterabtastung bewirkenden Dezimator 31 auf der Senderseite synchronisiert. Dem Interpolator 34 ist eine Verzögerungsleitung 35 nachgeschaltet, der sich ein modifizierter QMF-Tiefpaß 40 anschließt, der die gleichen Eigenschaften aufweist, wie der Tiefpaßfilter 20. In der Empfängerschaltung für den zweiten Übertragungskanal (Bandpaßzweig) ist ein Interpolator 36 vorgesehen, dem eine Verzögerungsleitung 37 nachgeschaltet ist. Der Ausgang der Verzögerungsleitung 37 ist mit dem Bandpaßfilter 41 verbunden, der die gleichen Eigenschaften wie der Bandpaßfilter 21 aufweist, bei der Realisierung der Filter mit geraden Koeffizienten (Z) jedoch mit dem Faktor -1 multipliziert ist. Die Ausgangssignale des Tiefpaßfilters 40 und des Bandpaßfilters 41 werden einer Addierstufe 60 zugeführt, deren Ausgang mit einem Tiefpaß 50 verbunden ist. Diesem schließt sich ein eine Unterabtastung bewirkender Dezimator 51 an, der mit dem die Überabtastung vornehmenden Interpolator 10 auf der Empfängerseite synchronisiert ist. Das rekonstruierte Ausgangssignal entspricht somit dem Originalspektrum des Eingangssignals.

Die eingesetzten Hoch- und Bandpaßfilter 20, 21, 40, 41 können sowohl mit gerader Koeffizientenzahl als auch mit ungerader Koeffizientenzahl realisiert werden. Als Filter werden bevorzugt linearphasige, digitale Filter, sogenannte FIR-Filter, eingesetzt, die eine aliasfreie Rekonstruktion des Ausgangsspektrums für eine beliebige Bandaufspaltung in dem erfindungsgemäß angegebenen Verhältnis ermöglichen.

1. Ausführungsbeispiel

einer allgemeinen Bandaufspaltung mit folgender Bedingung:

$$TP/HP = M/H, \quad M, N \in Z, \quad M \geq N$$

a) Unter Annahme, daß die Filter mit gerader Koeffizientenzahl realisiert werden, können die Verzögerungsleitungen 30, 32, 35 und 37 entfallen. Der Tiefpaß 20 sollte sodann die folgenden Übertragungsfunktionen erfüllen:

$$H_{(Tiefpaß)} \; f/= \frac{1}{2T} \cdot \frac{1}{N \cdot (M + N)} = -3dB$$

$$H_{(Tiefpaß)} \; f/= \frac{1}{2T} \cdot \frac{1}{M \cdot N} \leq -40dB$$

Das Signal sollte also dieser Übertragungsfunkion entsprechend gedämpft sein.
Der eingesetzte Bandpaß 21 muß in konsequenter Weise sich daraus ergebend folgende Forderung erfüllen:

$$H_{(HP21)} = H_{(TP20)} \cdot 2 \cdot \sin (4\pi fgt) \text{ mit } fg = \frac{1}{2T} \cdot \frac{1}{N (M + N)}$$

Weiterhin besteht Identität zwischen dem Tiefpaßfilter 20 und dem Tiefpaß 40. Der Bandpaß 21 unterscheidet sich vom Bandpaß 41 auf der Empfängerseite um den Faktor -1. Der Interpolator 34 oder der Tiefpaß 40 sollen eine Verstärkung von N · (M + N) ausführen. Der Interpolator 36 oder der Bandpaß 41 hingegen eine Verstärkung M · (M + N). Aus den genannten Bedingungen ergibt sich somit, daß der Interpolator 10 eine neue Abtastrate

$$T = T_{ORI} \cdot \frac{1}{M \cdot N}$$

- wobei $T_{ORI}$ die Grundabtastrate ist -
erfüllt. Die Grenzfrequenz des interpolierenden Tiefpasses 11 sollte betragen:

$$fg = \frac{1}{2T} \cdot \frac{1}{M \cdot N} \; (-6dB),$$

Verstärkung M · N.
Der Tiefpaß 50 auf der Empfängerseite muß eine Grenzfrequenz von

$$fg = \frac{1}{2T} \cdot \frac{1}{M \cdot N} \; (-6dB)$$

aufweisen, damit die Vor- und Nachfilterung unter Verwendung gerader und koeffizienter Zahlen die gewünschte aliasfreie Signalrekonstruktion ermöglicht. Anstelle der angegebenen Dämpfungen (-6dB) für den interpolierenden Tiefpaß können auch andere Dämpfungswerte realisiert werden. Es hat sich gezeigt, daß auch bei Dämpfungswerten von -3dB ein aliasfreies Zusammenführen der Signale möglich ist.

b) Bei der Realisierung von Filtern mit ungeraden Koeffizientenzahlen gelten bezüglich der Tiefpaßfilter 20 und 40 die gleichen Bedingungen wie unter a) beschrieben.
Die Übertragungsfunktion des Bandpasses als Modulation der Übertragungsfunktion des Tiefpasses mit dem Cosinus erfüllt nach dem Beispiel folgende Bedingung:

$$H_{(Bandpaß)} = H_{(Tiefpaß)} \cdot 2 \cdot \cos (4\pi \cdot fg \cdot t)$$

entsprechend Anspruch 16 mit

$$fg = \frac{1}{2T} \cdot \frac{1}{N\,(M+N)}.$$

Der Interpolator 34 oder der Tiefpaß 40 sollten dabei eine Verstärkung um N · (M + N) ausführen. Die Übertragungsfunktionen der verwendeten Tiefpässe in den beiden Zweigen sind jeweils gleich. In der Schaltungsrealisierung ist es nunmehr notwendig, entweder Verzögerungsleitungen 30 und 37 oder 32 und 35 in die beiden Signalzweige einzusetzen. Bei der Realisierung der Filter mit geraden Koeffizienten haben diese in der Übertragungsfunktion entweder einen Sinus oder Cosinus, so daß der Alias in dem einen Zweig negativ und im anderen Zweig positiv ist. Beim Zusammenführen löscht sich somit der durch nichtlineare Filter bedingte Alias automatisch aus, so daß das aliasfreie additive Spektrum am Ausgang anliegt. Bei Filtern mit ungerader Koeffizientenzahl ist dieses nicht der Fall. Der Alias ist in beiden Zweigen phasengleich. Die Schaltung gemäß dem Ausführungsbeispiel sieht nun vor, daß Verzögerungsleitungen in den Zweigen vorgesehen sind, die das Abtastraster mit den darin enthaltenen aliasbedingten Störanteilen um 180° und damit den Alias um 180° drehen. Bei der Addition löscht sich somit der entstehende Alias in den beiden Zweigen aus, so daß das Prinzip der Quadratur-Spiegel-Filter auch bei der Realisierung von Filterschaltungen mit ungeraden Koeffizienten möglich ist, was bisher nicht für möglich gehalten wurde.

Gleich, ob nun die Filter mit geradzahligen oder ungeradzahligen Koeffizienten realisiert werden, wird nach der ersten Unterabtastung der Tiefpaßanteil mit einer reduzierten Bandbreite von M/(M + N) · Bandbreite des ursprünglichen Signals, und der Hochpaßanteil mit einer entsprechenden Bandbreite von N/(M + N) · Bandbreite des ursprünglichen Signals übertragen. Die Übertragungsbandbreiten beider Kanäle addiert ergeben somit genau die Bandbreite des ursprünglichen Signals. Um die gewünschte Konversion der Abtastraten zu erreichen, wird das Signal, bevor es in die eigentliche Aufspaltungsfilterbahn geht, bereits mit einer Grundfrequenz abgetastet, senderseitig mit einem gemeinsamen Vielfachen von M und N überabgetastet und interpolationsgefiltert. Nach der Übertragung wird die Operation zur Aufspaltung der Signale spiegelverkehrt wieder rückgängig gemacht und nach der Filterung mittels des Tiefpasses 50 aliasfrei dem Dezimator 51 zur Unterabtastung für die Rekonstruktion angelegt.

2. Ausführungsbeispiel

Im nachfolgenden Beispiel wird eine Schaltungsausführung für eine kompatible 16:9-Übertragung mit Hilfe vertikaler Signalaufspaltung in einem Fernsehsystem nach dem PAL-System unter Verwendung des Letterbox-Verfahrens angegeben. Bei der Beschreibung wird ebenfalls auf das Blockschaltbild bezug genommen.

Um die 576 aktiven Zeilen einer 16:9 formatigen Originalvorlage, die mittels einer Kamera aufgenommen ist, in vertikaler Richtung in zwei verschieden große Anteile aufzuspalten, um bei einem Standardbildschirm (4:3) ein Bildformat von 16:9 zu erreichen, wird der Bildschirm vertikal in drei Bereiche aufgeteilt:
einen oberen Streifen von 72 Zeilen, einen mittleren Bereich des sichtbaren Bildes mit 432 Zeilen, und einen unteren Streifen von ebenfalls 72 Zeilen.

Es ergibt sich also eine Aufteilung von 432/144 = 3/1. In den 144 Zeilen der Randstreifen werden nun Signalanteile untergebracht, die der verbesserte Empfänger mit einer Bildröhre von 16:9 zur Rekonstruktion des Originalbildes benötigt. Die Auflösung in horizontaler Richtung kann im Rahmen des Übertragungskanals dabei beliebig gewählt werden, da sie keinen Einfluß auf die vertikale Aufspaltung hat. Damit die zusätzliche Information in den Streifen auf dem 4:3 Bildschirm im oberen und unteren Bereich für den Betrachter unsichtbar bleibt, wird das Signal in der Amplitude geeignet begrenzt und mit einer Amplitude unterhalb des Schwarzpegels des BAS-Signals übertragen. Dieses Verfahren ist dann anwendbar, wenn es sich um Vollbilddarstellungen mit 576 aktiven Zeilen und z. B. 25 Bewegungsphasen je Sekunde handelt (z. B. herkömmliche Filmabtaster), oder aber auf Signale, die nach dem echten Zeilensprungverfahren mit zwei ein Vollbild mit 625 Zeilen bildenden Halbbildern und einer Halbbildfrequenz von 50 Hz übertragen werden.

In Übereinstimmung mit der Beschreibung des ersten Beispieles gelten auch bei diesem speziellen Verfahren die gleichen Grundbedingungen. Der erste Übertragungskanal bildet die mittleren Zeilen eines Bildes:

Progressiv: 432 Zeilen, entsprechend Zeilen 73 bis 504;
Zeilensprungsverfahren: 216 Zeilen, entsprechend Zeilen 37 bis 252.

Über den zweiten Übertragungskanal (Bandpaß) werden die benötigten Zusatzinformationen für das Letterbox-Verfahren übertragen:

Progressiv: 144 Zeilen, entsprechend Zeilen 1 bis 72 und 505 bis 576 des aktiven Bildes;

Zeilsprungverfahren:      72 Zeilen, entsprechend Zeilen 1 bis 36 und 253 bis 288.

Der Einsatz des erfindungsgemäßen Verfahrens ist somit sowohl bei der progressiven Bildabtastung mit 25 Vollbild-Bewegungsphasen, als auch beim echten Zeilensprungverfahren mit 50 Bewegungsphasen und Filterung im Teilbild einsetzbar. In beiden Fällen ist die gleiche Vertikalauflösung gegeben. Beim Zeilensprungverfahren wird lediglich zusätzlich das lästige Zeilenflackern überlagert. Wird jedoch das Signal im echten Zeilensprungverfahren gefiltert, so verschlechtert sich die Auflösung einer 16:9 Darstellung auf einem kompatiblen Empfänger mit einer Bildröhre 4:3 gegenüber dem verbesserten Empfänger um ungefähr dem Faktor 2, was jedoch hingenommen werden kann und keine merkliche Beeinträchtigung bei einer Bildwiedergabe darstellt. Mit einem 16:9-Empfänger hingegen wird durch die Signalrekonstruktion die volle Auflösung erzielt. Die eingesetzten Filter und Funktionsschaltungen müssen folgende Bedingungen erfüllen:

Der Interpolator 10 vollzieht eine dreifache Überabtastung, so daß die neue Abtastrate

$$T = T_{ORI} \cdot \frac{1}{3}$$

beträgt, was bezogen auf das PAL-System einer Zeilenfrequenz von $3 \cdot 15\,625$ Hz entspricht.

Für den interpolierenden Tiefpaß 11 gilt folgende Bedingung:

$$fg = \frac{1}{3}\ (\text{-6dB}),$$

Verstärkung 3,
was dem Faktor M entspricht. Der angegebene Dämpfungswert kann ein anderer sein, z. B. -3dB.

Der modifizierte QMF-Tiefpaß 20 im Tiefpaßzweig muß folgende Übertragungsfunktionen erfüllen:

$$H_{20}/f = \frac{1}{2T} \cdot \frac{1}{N \cdot (M + N)} = -\,3\text{dB}$$

$$H_{20}/f = \frac{1}{2T} \cdot \frac{1}{M \cdot N} \leq -\,40\text{dB}$$

Der Modifizierte QMF-Bandpaßfilter 21 sollte eine Grenzfrequenz von

$$fg = 432\ \text{L/PH}\ (\text{-3dB})$$

besitzen.

Die Verzögerungsleitungen 30, 32, 35 und 37 werden nur fallweise notwendig, wenn die bereits beschriebenen Bedingungen unter Beispiel 1 b) zu erfüllen sind. Es sei in diesem Beispiel angenommen, daß die Verzögerungsleitung 30 das Signal um zwei Zeilen, die Verzögerungsleitung 32 das Signal um sechs Zeilen und die Verzögerungsleitung 35 das Signal um sechs Zeilen sowie die Verzögerungsleitung 37 das Signal um zwei Zeilen verzögern. Der Dezimator 31 nimmt eine Unterabtastung um den Faktor 4 vor, der Dezimator 33 eine solche Unterabtastung um den Faktor 12. Die Abtastung erfolgt synchron.

In umgekehrter Weise wird auf der Empfängerseite eine Überabtastung erforderlich. Der Interpolator 34 nimmt deshalb eine Überabtastung um den Faktor 4 vor, der Interpolator 36 um den Faktor 12, wobei die Synchronisation jeweils sichergestellt ist. Der Tiefpaß 50 weist eine Grenzfrequenz

$$fg = \frac{1}{6T}\ (\text{-6dB})$$

auf. Der Dezimator 51 für die Unterabtastung tastet das gefilterte Signal um dem Faktor 3 ab, und zwar synchron mit der Überabtastung durch den Interpolator 3 auf der Senderseite. Die Filter 20 und 21 müssen die gleichen Anforderungen erfüllen, wie sie bereits vorher beschrieben sind.

Der interpolierende Tiefpaß 11 kann selbstverständlich in einer Filteranordnung gemeinsam mit den Filtern 20 und 21 integriert sein. Dasselbe trifft auch für den Tiefpaß 50 auf der Empfängerseite zu, der mit den Filtern 40 und 41 in einer gemeinsamen Filteranordnung integrierbar ist.

Die Wirkungsweise der Schaltung bezogen auf die kompatible 16:9-Übertragung im PAL-System ist folgende:

### 1. Tiefpaßzweig

Der Tiefpaßzweig 20 führt eine Bandbegrenzung des Signal auf 432 L/PH (-3dB) durch. Die Verzögerungsleitung 30 wird nur bei Einsatz von FIR-Filtern mit ungerader Koeffizientenzahl benötigt, wenn diese Filter als Tiefpaßfilter 20, 40 und Bandpaßfilter 21 und 41 eingesetzt werden. Nach der Unterabtastung in dem Dezimator 31 um den Faktor 4 liegen 432 Zeilen, die in dem Übertragungskanal 1 entsprechend den Zeilen 73 bis 504 bei 625 Zeilen /1:1/25 Hz, bzw. 37... 225 und 325... 540 bei 625 Zeilen/2:1/50 Hz übertragen werden und das Bildsignal für den kompatiblen Empfänger darstellen. Auf der Seite des verbesserten 16:9-Empfängers findet zunächst eine Aufwärtskonversion um den Faktor 4 in dem Interpolator 34 statt, die, wie die Interpolatorschaltung 10, mit einem Zeilenspeicher ausgestattet sein kann, um die Überabtastung vornehmen zu können. Für die Verzögerungsleitung 35 gilt die unter Beispiel 1 b) beschriebene Bedingung. Der rekonstruierende Tiefpaß 40 ist identisch mit dem Tiefpaß 20 aufgebaut. Am Ausgang des Tiefpasses 40 liegt somit ein Signal mit einer Grenzfrequenz 432 L/PH (-6 dB) an. Dieses Signal kann bei einem Empfänger mit einer Bildwiedergabe 4:3 zur direkten Darstellung verwendet werden. Die Übertragung und Verarbeitung der über den zweiten Übertragungskanal übertragenen Zusatzinformationen und deren Abarbeitung ist hierfür nicht notwendig, ebenso nicht die Rekonstruktion des empfangenen Signals vom BP-Zweig. Soll das Verfahren aber auch angewendet werden auf einen verbesserten Bildempfänger, so ist der zweite Kanal mit dem Bandpaßzweig vorzusehen und es sind beide Signale zusammenzuführen.

### 2. Bandpaßzweig

Die Verarbeitung im Bandpaßzweig erfolgt analog der im Tiefpaßzweig. Der Bandpaßfilter 21 besitzt eine Grenzfrequenz 432 L/PH (-3 dB). Für die Verzögerungsleitung gelten die beschriebenen Vereinbarungen im Beispiel 1 b), d.h. diese werden in Kombination nur nötig, wenn die FIR-Filter als Tief- und Bandpaßfilter mit ungeraden Koeffizienten gebildet werden. Der Dezimator 33 führt eine Abwärtskonversion um den Faktor 12 durch. An seinem Ausgang liegen 144 Zeilen vor. Diese Zeilen stellen die Hochpaßinformation dar und werden in den Letterboxbalken entsprechend den Zeilen 1... 72 und 505...576 (625 Zeilen /1:1/25 Hz) bzw. 1... 33, 253 ... 288, 289 bis 324 und 541...576 (625 Zeilen/2: 1/50 Hz) im Subschwarzbereich (Kompression um ca. den Faktor 4) übertragen. Im verbesserten 16:9-Empfänger wird zunächst eine Interpolation um den Faktor 12 mit dem Interpolator 36 durchgeführt. Der rekonstruierende Bandpaßfilter 41 ist identisch mit dem Bandpaßfilter 21 im Bandpaßzweig. Anschließend werden die Band- und Tiefpaßsignale in der Schaltung 60 addiert und einer Tiefpaßnachfilterung in dem Tiefpaß 50 unterzogen, der eine Grenzfrequenz von 546 L/PH (-6 dB) aufweist. Mit dieser Maßnahme werden Aliasstörungen bei der nachfolgenden Unterabtastung mittels des Dezimators 51 vermieden. Am Ausgang des Dezimators 51 steht das ursprünglich von der Kamera gelieferte Signal wieder zur Verfügung, so daß bei einem verbesserten Empfänger das Bild mit der vollen Auflösung dargestellt werden kann.

### Patentansprüche

1. Verfahren zum Bandaufspalten eines in einem Sender mit einer Grundabtastfrequenz abgetasteten Signals und zum Zusammenführen in einem Empfänger, wobei

das Spektrum des mit der Grundabtastfrequenz abgetasteten Signals überabgetastet und in einer ersten Filteranordnung im Sender in Frequenzbänder aufgeteilt wird,

die den aus der Bandaufspaltung entstandenen Teilspektren entsprechenden Signale in Abtastschaltungen unterabgetastet werden und die jeweiligen Abtastwerte über bandbegrenzte Kanäle übertragen werden,

das empfangene Signal eines jeden Kanals in einer empfängerseitig vorgesehenen Abtastschaltung mit einer der senderseitigen Unterabtastung identischen Abtastrate überabgetastet wird und

die so gewonnenen Spektren über eine zweite Filteranordnung zum Originalspektrum zusammengeführt werden, wobei folgende Verfahrensschritte vorgesehen sind:

das senderseitig mit der Grundabtastfrequenz abgetastete Signal wird in einer weiteren Abtastschaltung mit einem Faktor M · N überabgetastet und

das dabei entstehende Spektrum senderseitig in der ersten Filteranordnung in asymmetrische Frequenzanteile mit einem Tiefpaß- und einem Bandpaßanteil

TP/HP = M/N, M, N, ∈ Z, M ≥ N aufgespalten, wobei das Verhältnis der Bandbreiten des Tiefpasses zum Bandpaß durch die Faktoren M und N bestimmt ist und M, N beliebig wählbare Elemente der Menge der ganzen Zahlen Z (Koeffizientenzahl) sind;

der im Tiefpaßzweig übertragene Signalanteil wird senderseitig mit einer Unterabtastrate N (M + N) abgetastet und die unterabgetasteten Abtastwerte übertragen;

der im Bandpaßzweig übertragene Signalanteil wird senderseitig mit einer Unterabtastrate M (M + N) abgetastet und die unterabgetasteten Abtastwerte ebenfalls übertragen;

die übertragenen Signale werden empfängerseitig in einer Abtastschaltung mit einer Abtastrate überabgetastet, die gleich der vor der Unterabtastung vorliegenden Abtastrate in dem zugeordneten Frequenzbandzweig des Senders ist und über eine zweite Filteranordnung den Eingängen einer Addierschaltung zugeführt und

das addierte Ausgangssprektrum wird in einer nachgeordneten Abtastschaltung mit einer Abtastrate M · N unterabgetastet.

2. Verfahren nach Anspruch 1, bei welchem das senderseitig überabgetastete Signal vor der Bandaufspaltung durch einen Tiefpaß mit der Grenzfrequenz

$$fg = \frac{1}{2T} \cdot \frac{1}{M \cdot N}$$

bei einer Verstärkung M · N
vorgefiltert und
empfangsseitig das durch Addition zurückgewonnene Original spektrum vor der empfangsseitigen Unterabtastung in einem Tiefpaßfilter mit der gleichen Grenzfrequenz nachgefiltert wird.

3. Verfahren nach Anspruch 1 oder 2, bei welchem der Signalanteil im Tiefpaßzweig senderseitig mit einer Verzögerungsleitung um

$$\frac{N}{2} \cdot (M + N)$$

- Abtasttakte bei beispielsweise: M=3, N=1; Tiefpaß 2 Takte - und im Bandpaßzweig mit einer Verzögerungsleitung um

$$\frac{M}{2} \cdot (M + N)$$

- Abtasttakte bei beispielsweise: M=3, N=1; Bandpaß 6 Takte - verzögert wird und empfängerseitig in den Tief- und Bandpaßzweigen umgekehrt verzögert wird, wobei entweder die Verzögerung senderseitig im Tiefpaßzweig und empfängerseitig im Bandpaßzweig oder senderseitig im Bandpaßzweig und empfängerseitig im Tiefpaßzweig erfolgt.

4. Verfahren nach Anspruch 1 zur Übertragung eines Fernsehsignals mit synthetischem oder echtem Zeilensprung für eine Bilddarstellung mit einem Seitenverhältnis 16:9 bei voller Abwärtskompatibilität zur Darstellung im Seitenverhältnis 4:3, wobei die senderseitige Bandaufspaltung des Signals in vertikaler Richtung im Verhältnis TP/BP = M/N = 3:1 erfolgt, und wobei das Einzelbild in drei Sektionen nach dem Letter-Box-Verfahren aufgeteilt ist und die mittlere Bildsektion über den Tiefpaßzweig übertragen wird und die beiden Randsektionen über den Bandpaßzweig übertragen werden,
und wobei weiterhin empfängerseitig entweder ein Tiefpaßzweig oder ein Tiefpaßzweig und ein Bandpaßzweig vorhanden sind oder bei einem herkömmlichen Empfänger mit einem Fernsehbildschirm mit Seitenverhältnis 4:3 dieser die übertragenen Signale des Tiefpaßzweiges empfängt und zur Darstellung bringt.

5. Sender zur Durchführung des senderseitigen Verfahrens nach einem der vorhergehenden Ansprüche, bei welchem

ein Interpolator (10) als Tastschaltung für die Überabtastung des mit der Grundabtastfrequenz abgetasteten Eingangssignals, dessen neue Abtastrate

$$T = T_{ORI} \cdot \frac{1}{M \cdot N}$$

ist,

eine erste Filteranordnung zur Frequenzbandaufspaltung des überabgetasteten Signals mit einem Tiefpaßfilter (20) mit der Grenzfrequenz

$$fg = \frac{1}{2T} \cdot \frac{1}{N\,(M + N)}$$

ein Bandpaßfilter (21) im zweiten Zweig mit der Grenzfrequenz

$$fg = \frac{1}{2T} \cdot \frac{1}{N\,(M + N)}$$

ein Dezimator (31) zur Unterabtastung des im Tiefpaßzweig übertragenen Signalanteils mit einer Abtastrate N · (M + N) und

ein Dezimator (33) zur Unterabtastung des im Bandpaßzweig übertragenen Signalanteils mit einer Abtastrate M · (M + N) vorgesehen sind,

wobei der Dezimator (33) mit dem Dezimator (31) synchronisiert ist.

6.  Sender nach Anspruch 5, bei welchem zwischen dem Interpolator (10) am Eingang und der Filteranordnung (20, 21) ein interpolierender Tiefpaß (11) mit einer Grenzfrequenz

$$fg = \frac{1}{2T} \cdot \frac{1}{M \cdot N}$$

Verstärkung M · N zwischengeschaltet ist.

7.  Sender nach einem der Ansprüche 5 oder 6, bei welchem im Tiefpaßzweig zwischen dem Tiefpaßfilter (20) und dem Dezimator (31) eine Verzögerungsleitung (30) mit einer Verzögerung

$$\frac{N}{2} \cdot (M + N)$$

zwischengefügt ist, und/oder zwischen dem Bandpaßfilter (21) im zweiten Zweig und dem nachgeschalteten Dezimator (33) eine Verzögerungsleitung mit der Verzögerung

$$\frac{M}{2} \cdot (M + N)$$

zwischengeschaltet ist.

8.  Empfänger zur Durchführung des Verfahrens empfängerseitig nach einem der Ansprüche 1 bis 4, bei welchem in dem Tiefpaßzweig ein Interpolator (34) für die Überabtastung mit der Abtastrate N · (M + N) und ein Tiefpaßfilter (40) mit der Grenzfrequenz

$$fg = \frac{1}{2T} \cdot \frac{1}{N\,(M + N)}$$

vorgesehen sind, im Bandpaßzweig ein Interpolator (36) für die Überabtastung mit der Abtastrate M · (M + N) und ein nachgeschalteter Bandpaßfilter (41) mit einer Grenzfrequenz

$$fg = \frac{1}{2T} \cdot \frac{1}{N\,(M + N)}$$

vorgesehen sind,
die Ausgänge der Filter (40, 41) mit einer Addierstufe (60) verbunden sind,
und mit dem Ausgang der Addierstufe (60) ein Dezimator (51) für die Unterabtastung angeschaltet ist, wobei die Interpolatoren (34, 36) mit der Abtastung der Dezimatoren (31, 33) des Senders und der am Ausgang vorgesehene Dezimator (51) mit dem Interpolator (10) am Eingang des Senders synchronisiert sind.

9. Empfänger nach Anspruch 8, bei welchem zwischen dem Interpolator (34) im Tiefpaßzweig und dem Tiefpaßfilter (40) eine Verzögerungsleitung mit einer Verzögerung

$$\frac{M}{2} \cdot (M + N)$$

zwischengefügt ist, und/oder zwischen dem Interpolator im Bandpaßzweig (36) und dem Bandpaßfilter (41) eine Verzögerungsleitung mit einer Verzögerung

$$\frac{N}{2} \cdot (M + N)$$

zwischengeschaltet ist.

10. Empfänger nach Anspruch 8 oder 9, bei welchem zwischem dem Ausgang der Addierstufe (60) und dem Dezimator (51) ein Tiefpaß mit einer Grenzfrequenz

$$fg = \frac{1}{2T} \cdot \frac{1}{M \cdot N} \;,$$

Verstärkung $M \cdot N$
zwischengeschaltet ist.

11. Sender und Empfänger nach einem der Ansprüche 6 bis 10, wobei die Tiefpaß- und Bandpaßfilter (20, 21, 40, 41) als digitale FIR-Filter und mit geraden oder ungeraden Koeffizientenzahlen realisiert sind, und bei Realisierung mit gerader Koeffizientenzahl die Verzögerungsleitungen entfallen.

12. Sender und Empfänger nach Anspruch 11, wobei bei der Realisierung der Filter mit geraden Koeffizientenzahlen die Tiefpaßfilter im Tiefpaßzweig gleich sind und die Bandpaßfilter im Bandpaßzweig sich um den Faktor -1 unterscheiden.

13. Sender und Empfänger nach Anspruch 12, wobei der Tiefpaß die Übertragungsfunktionen

$$H_{(Tiefpaß)/f} = \frac{1}{2T} - \frac{1}{N\,(M + N)} = \text{-3dB}$$

und

$$H_{(Tiefpaß)/f} = \frac{1}{2T} \cdot \frac{1}{M \cdot N} \leq \text{-40dB}$$

erfüllt, und die Übertragungsfunktionen des Bandpasses als Modulation der Übertragungsfunktion des Tiefpasses mit dem Sinus folgende Forderung erfüllen:

$$H_{(Banpaß)} = H_{(Tiefpaß)} \cdot 2 \cdot \sin\,(4\pi \cdot fg \cdot t).$$

14. Sender und Empfänger nach Anspruch 11, wobei bei Realisierung der FIR-Filter mit ungeraden Koeffizientenzahlen zur Drehung des Abtastrasters um 180° in einem der beiden Zweige entweder die Verzögerungsleitungen (30, 37) in dem senderseitigen Tiefpaßzweig und dem empfängerseitigen Bandpaßzweig oder die Verzögerungsleitungen (32, 35) in dem senderseitigen Bandpaßzweig und dem empfängerseitigen Tiefpaßzweig vorgesehen sind.

**15.** Sender und Empfänger nach Anspruch 11 oder 14, wobei der Tiefpaß die Übertragungsfunktionen

$$H_{(Tiefpaß)/f} = \frac{1}{2T} \cdot \frac{1}{N\,(M + N)} = \text{-3dB}$$

und

$$H_{(Tiefpaß)/f} = \frac{1}{2T} \cdot \frac{1}{M \cdot N} \leq \text{-40dB}$$

erfüllt, und die Übertragungsfunktionen des Bandpasses als Modulation der Übertragungsfunktion des Tiefpasses mit dem Cosinus folgende Forderung erfüllen:

$$H_{(Bandpaß)} = H_{(Tiefpaß)} \cdot 2 \cdot \cos\,(4\pi \cdot fg \cdot t).$$

**16.** Sender nach Anspruch 5, mit einem Videosignalgenerator, welcher an seinem Ausgang ein Breitbild-Videosignal mit einem ersten Bildbreiten- zu Bildhöhen-Verhältnis und einer ersten Zeilenzahl zur Verfügung stellt, wobei die erste Filteranordnung (11, 20, 21) zur Aufspaltung des Breitbild-Videosignals in vertikal-niederfrequente und vertikal-höherfrequente Ortsfrequenz-Signalteile

ein Tiefpaßfilter (20) als ersten Zeilenzahlkonverter zur Herabsetzung der Zeilenzahl der vertikal-niederfrequenten Ortsfrequenz-Signalteile,

ein Bandpaßfilter (21) als Zeilenzahlkonverter zur Herabsetzung der Zeilenzahl der vertikal-höherfrequenten Ortsfrequenz-Signalteile und

eine Schaltung zur Amplitudenreduzierung der vertikal-höherfrequenten Ortsfrequenz-Signalteile, derart, daß die Signalpegel der vertikal-höherfrequenten Ortsfrequenz-Signalteile im Ultraschwarzbereich liegen, aufweist.

**17.** Sender nach Anspruch 16 zur Frequenzbandaufspaltung im Verhältnis TP/BP = 3:1 für die kompatible 16:9-Übertragung in 4: 3 PAL-Systemen, bei welchem der Interpolator (10) das von einem Videosignalgenerator mit einer Grundtaktfrequenz abgetastete Eingangssignal konvertiert, ein nachgeschalteter Tiefpaß (11) das Signalspektrum begrenzt, und nach der anschließenden unter Verwendung von FIR-Filtern durchgeführten Aufspaltung das spektralbegrenzte Signal im Tiefpaßzweig bei Verwendung eines FIR-Filters mit ungerader Koeffizientenzahl einer Verzögerungsleitung (30) zugeführt wird, die das Signal um zwei Zeilen verzögert, und im Bandpaßzweig die Bandpaßanteile einer Verzögerungsleitung (32) zugeführt werden, die das Signal um sechs Zeilen verzögert, und die Unterabtastung im Dezimator (31) im Tiefpaßzweig vierfach und im Dezimator (33) im Bandpaßzweig zwölffach erfolgt, wobei die Verzögerungsleitungen (30, 32) des Tiefpaßzweigs und des Bandpaßzweigs nur bei Einsatz von FIR-Filtern mit ungerader Koeffizientenzahl der sender- und empfangsseitigen Filteranordnung benötigt werden.

**18.** Empfänger nach Anspruch 8, bei welchem

der Interpolator (34) im Tiefpaßzweig das empfangene Signal mit einer vierfachen Abtastrate überabtastet,

der Interpolator (36) im Bandpaßzweig das eingehende Signal mit einer zwölffachen Abtastrate überabtastet,

das hinter dem Interpolator (34) des Tiefpaßzweiges angeordnete Tiefpaßfilter (40) als FIR-Filter realisiert ist,

das hinter dem Interpolator (36) des Bandpaßzweiges angeordnete Bandpaßfilter (41) als FIR-Filter realisiert ist,

eine bei ungerader Koeffizientenzahl der FIR-Filter (40, 41) im Tiefpaßzweig zwischen dem Interpolator (34) und dem Tiefpaßfilter (40) benötigte Verzögerungsleitung (35), die das Signal um sechs Zeilen verzögert,

eine bei ungerader Koeffizientenzahl der FIR-Filter (40, 41) im Bandpaßzweig zwischen dem Interpolator (36) und dem Bandpaßfilter (41) benötigte Verzögerungsleitung (37), die das Signal um zwei Zeilen verzögert, und

ein der Addierstufe (60) nachgeschaltetes Tiefpaßfilter (50) vorgesehen ist und

der dem Tiefpaßfilter nachgeschaltete Dezimator (51) zur Dreifachunterabtastung vorgesehen ist, wobei vom Ausgang des Dezimators (51) das Ausgangsspektrum abgreifbar ist.

19. Sender und Empfänger nach Anspruch 17 und 18 für den Einsatz zur Übertragung und Darstellung eines Vollbildes durch progressive Darstellung oder eines nach dem Zeilensprungverfahren übertragenen Bildes, wobei bei der progressiven Bilddarstellung in dem Tiefpaßkanal 432 bzw. beim Zeilensprungverfahren 216 Zeilen übertragen werden,
in dem Bandpaß kanal die Signale der beim progressiven Verfahren abgetrennten Zeilen 1 bis 72 und 505 bis 576 und beim Zeilensprungverfahren 72 Zeilen entsprechend den Zeilen 1 bis 36 und 253 bis 288 übertragen werden, und die Zeilen bei Darstellung auf einem Bildschirm 16:9 im Letter-Box-Verfahren aus beiden Übertragungskanälen zusammengeführt werden und bei der Darstellung auf einem 4:3 Bildschirm nur die Zeilen aus dem Tiefpaßübertragungskanal dargestellt werden.

20. Sender nach Anspruch 19, bei welchem der Tiefpaßfilter (20) das Spektrum auf 432 L/PH (-3dB) bzw. auf 216 L/PH (-3dB) begrenzt und der Wert der Grenzfrequenz des Bandfilters (40) ist.

21. Sender und Empfänger nach einem der Ansprüche 5 bis 18, wobei die Abtastschaltungen und die Verzögerungsschaltungen durch Speicherschaltungen realisiert sind.

22. Sender und Empfänger nach Anspruch 15 oder Sender nach Anspruch 16, wobei empfängerseitig der Interpolator (34) oder der Tiefpaß (40) eine Verstärkung um $N \cdot (M + N)$ und der Interpolator (36) oder der Bandpaßfilter (41) im Bandpaßzweig eine Verstärkung um $M \cdot (M + N)$ ausführen.

## Claims

1. Method for the band-splitting of a signal sampled at a fundamental sampling frequency in a transmitter and for loading together in a receiver, wherein

the spectrum of the signal sampled at the fundamental sampling frequency is upsampled and divided up into frequency bands in a first filter arrangement in the transmitter,
the signals corresponding with the partial spectra that have arisen from the band-splitting are downsampled in sampling circuits and the respective sampling values are transmitted over band-limited channels.
the received signal of each channel is upsampled in a sampling circuit provided at the receiver end at a sampling rate identical with the downsampling at the transmitter end,
the spectra thus obtained are led together into the original spectrum by way of a second filter arrangement, wherein the following method step are provided:
the signal sampled at the fundamental sampling frequency at the transmitter end is upsampled by a factor M. N in a further sampling circuit and
the spectrum then arising is split in the first filter arrangement at the transmitter end into asymmetric frequency components with a low-pass part and a band-pass part
TP/HP - M/N, M, N, $\in$ Z, M $\geq$ N, wherein the ratio of the bandwidths of the low-pass filter to the band-pass filter is determined by the factors M and N and M and N are elements, which are selectable as desired, of the quantity of the whole numbers Z (co-efficient number),
the signal component transmitted in the low-pass branch is sampled at the transmitter end at a downsampling rate N (M + N) and the downsampled sampling values are transmitted,
the signal component transmitted in the band-pass branch is sampled at the transmitter end at a downsampling rate M (M + N) and the downsampled sampling values are likewise transmitted,
the transmitted signals are upsampled at the receiver end in a sampling circuit at a sampling rate which is equal to the sampling rate present before the downsampling in the associated frequency band branch of the transmitter and fed by way of a second filter arrangement to the inputs of an adding circuit and
the added output spectrum is downsampled at a sampling rate M.N in a sampling circuit arranged therebehind.

2. Method according to claim 1, in which the signal upsampled at the transmitter end is preliminary filtered before the band-splitting by a low pass filter with the cut-off frequency

$$fg = \frac{1}{2T} \cdot \frac{1}{M \cdot N}$$

with an amplification M.N and
the original spectrum recovered by addition at the receiver end is further filtered in a low pass filter with the same cut-off frequency before the downsampling at the receiver end.

3. Method according to claim 1 or 2, in which the signal component in the low-pass branch is delayed at the transmitter end by a delay line by

$$\frac{N}{2} \cdot (M + N)$$

sampling cycles, with for example M = 3, N = 1, low-pass filter 2 cycles and in band-pass branch is delayed by a delay line by

$$\frac{M}{2} \cdot (M + N)$$

sampling cycles, with for example M = 3, N = 1, band-pass filter 6 cycles and
delayed conversely at the receiver end in the low-pass and band-pass branches, wherein either the delay at the transmitter end takes place in the low-pass branch and at the receiver end in the band-pass branch or at the transmitter end in the band-pass branch and at the receiver end in the low-pass branch.

4. Method according to claim 1 for the transmission of a tel.evision signal with synthetic or real interlacing for an image reproduction with an aspect ratio of 16:9 with full downward compatibility for reproduction in an aspect ratio of 4:3, wherein the band-splitting at the transmitter end of the signal in vertical direction takes place in the ratio of TP/BP = M/N = 3:1 and wherein the individual image is divided up into three sections by the letter box method and the middle image section is transmitted by way of the low-pass branch and both the edge sections are transmitted by way of the band-pass branch, and wherein furthermore either a low-pass branch is or a low-pass branch and a band-pass branch are present at the receiver end or, in the case of a conventional receiver with a television picture screen with an aspect ratio of 4:3, this receiver receives and reproduces the transmitted signals of the low-pass branch.

5. Transmitter for the performance of the method at the transmitter end according to one of the preceding claims, in which an interpolator (10) is provided as scanning circuit for the upsampling of the input signal which is sampled at the fundamental sampling frequency and the new sampling rate of which is

$$T = T_{ORI} \cdot \frac{1}{M \cdot N}$$

a first filter arrangement is provided for the frequency-band-splitting of the upsampled signal by a low-pass filter (20) with the cut-off frequency of

$$fg = \frac{1}{2T} \cdot \frac{1}{N\,(M + N)}$$

a band-pass filter (21) is provided in the second branch and has the cut-off frequency of

$$fg = \frac{1}{2T} \cdot \frac{1}{N\,(M + N)}$$

a decimator (31) is provided for downsampling of the signal component, which is transmitted in the low-pass branch, at a sampling rate of N(M + N) and
a decimator (33) is provided for downsampling of the signal component, which is transmitted in the band-pass branch, at a sampling rate of M(M + N),
wherein the decimator (31) is synchronised with the decimator (33).

**6.** Transmitter according to claim 5, in which an interpolating low-pass filter (11) with a cut-off frequency of

$$fg = \frac{1}{2T} \cdot \frac{1}{M \cdot N}$$

with an amplification M.N
is connected between the interpolator (10) at the input and the filter arrangement (20, 21).

**7.** Transmitter according to one of the claims 5 and 6, in which a delay line (30) with a delay of

$$\frac{N}{2} \cdot (M + N)$$

is inserted in the low-pass branch between the low-pass filter (22) and the decimator (31) and/or a delay line with the delay of

$$\frac{M}{2} \cdot (M + N)$$

is connected between the band-pass filter (21) and the decimator (33) connected therebehind.

**8.** Receiver for the performance of the method at the receiver end according to one of the claims 1 to 4, in which an interpolator (34) for the upsampling at the sampling rate N(M + N) and a low-pass filter with the cut-off frequency of

$$fg = \frac{1}{2T} \cdot \frac{1}{N(M + N)}$$

are provided in the low-pass branch,
an interpolator (36) for the upsampling at the sampling rate M(M + N) and a band-pass filter (41) connected therebehind and with the cut-off frequency of

$$fg = \frac{1}{2T} \cdot \frac{1}{N(M + N)}$$

are provided in the band-pass branch,
the outputs of the filters (40, 41) are connected with an adding stage (60) and a decimator (51) for the downsampling is connected with the output of the adding stage (60), wherein the interpolators (34, 36) are synchronised with the sampling of the decimators (31, 33) of the transmitter and the decimator (51) at the output is synchronised with the interpolator (10) at the input of the transmitter.

**9.** Receiver according to claim 8, in which a delay line with a delay of

$$\frac{M}{2} \cdot (M + N)$$

is interposed between the interpolator (34) in the low-pass filter branch and the low-pass filter (40) and/or a delay line with a delay of

$$\frac{N}{2} \cdot (M + N)$$

is connected between the interpolator (36) in the band-pass branch and the band-pass filter (41).

**10.** Receiver according to claim 8 or 9, in which a low-pass filter with a cut-off frequency of

$$fg = \frac{1}{2T} \cdot \frac{1}{M \cdot N}$$

with an amplification M.N
is connected between the output of the adding stage (60) and the decimator (51).

11. Transmitter and receiver according to one of the claims 6 to 10, wherein the low-pass filters and band-pass filters (20, 21, 40, 41) are realised as digital FIR filters and with even or odd co-efficient numbers and the delay lines are omitted in the case of realisation with even co-efficient number.

12. Transmitter and receiver according to claim 11, wherein the low-pass filters in the low-pass branch are the same and the band-pass filters in the band-pass branch differ by the factor -1 in the case of realisation with even co-efficient numbers.

13. Transmitter and receiver according to claim 12, wherein the low-pass filter fulfils the transfer functions

$$H_{(low\text{-}pass)/f} = \frac{1}{2T} - \frac{1}{N\,(M + N)} = -3dB$$

and

$$H_{(low\text{-}pass)/f} = \frac{1}{2T} \cdot \frac{1}{M \cdot N} \leq 40dB$$

and the transfer functions of the band-pass filter as modulation of the transfer function of the low-pass filter fulfil the following requirement by the sine

$$H_{(band\text{-}pass)} = H_{(low\text{-}pass)}.2.\sin(4\pi.fg.t).$$

14. Transmitter and receiver according to claim 11, wherein either the delay lines (30, 37) in the low-pass branch at the transmitter end and the band-pass branch at the receiver end or the delaylines (32, 35) in the band-pass branch at the transmitter end and the low-pass branch at the receiver end are provided for rotation of the sampling raster through 180° in one of both the branches in the case of realisation of the FIR filters with odd co-efficient numbers.

15. Transmitter and receiver according to claim 11 or 14, wherein the low-pass filter fulfils the transfer functions

$$H_{(low\text{-}pass)/f} = \frac{1}{2T} \cdot \frac{1}{N\,(M + N)} = -3dB$$

and

$$H_{(low\text{-}pass)/f} = \frac{1}{2T} \cdot \frac{1}{M \cdot N} \leq -40dB$$

and the transfer functions of the band-pass filter as modulation of the transfer function of the low-pass filter fulfil the following requirement by the cosine

$$H_{(band\text{-}pass)} = H_{(low\text{-}pass)}.2.\cos(4\pi.fg.t).$$

16. Transmitter according to claim 5, with a video-signal generator which makes a wide-picture video signal with a first aspect ratio and a first line number available at its output, wherein the first filter arrangement (11, 20, 21) for the splitting of the wide-picture video signal into vertical lower-frequency and vertical higher-frequency local frequency signal parts comprises

a low-pass filter (20) as first line number converter for the lowering of the line number of the vertical lower-frequency local frequency signal parts

a band-pass filter (21) as line number converter for the lowering of the line number of the vertical higher-frequency local frequency signal parts and

a circuit for the amplitude reduction of the vertical higher-frequency local frequency signal parts in such a manner that the signal levels of the vertical higher-frequency local frequency signal parts lie in the ultra-black range.

17. Transmitter according to claim 6 for the frequency-band-splitting in the ratio TP/BP = 3:1 for the compatible 16:9 transmission in PAL systems, in which the interpolator (10) converts the input signal sampled at a fundamental pulse frequency by a video signal generator, a low-pass filter (11) connected therebehind limits the signal specrum and the spectrally limited signal is, after the subsequent splitting-up performed with the use of FIR filters, fed in the low-pass branch with the use of an FIR filter of odd co-efficient number to a delay line (30), which delays the signal by two lines, and the band-pass components are fed in the band-pass branch to a delay line (32), which delays the signal by six lines, and the downsampling takes place fourfold in the decimator (31) in the low-pass branch and twelvefold in the decimator (33) in the band-pass branch, wherein the delay lines (30, 32) of the low-pass branch and of the band-pass branch are needed only on the use of FIR filters of odd co-efficient number of the filter arrangement at the transmitter end and at the receiver end.

18. Receiver according to claim 8, in which

the interpolator (34) in the low-pass branch upsamples the received signal at a fourfold sampling rate, the interpolator (36) in the band-pass branch upsamples the incoming signal at a twelvefold sampling rate, the low-pass filter (40) arranged behind the interpolator (34) of the low-pass branch is realised as FIR filter, the band-pass filter (41) arranged behind the interpolator (36) of the band-pass branch is realised as FIR filter, a delay line (35), which delays the signal by six lines and is needed between the interpolator (34) and the low-pass filter (40) in case of odd co-efficient number of FIR filters (40, 41) in the low-pass branch, a delay line (37), which delays the signal by two lines and is needed between the interpolator (36) and the band-pass filter (41) in case of odd co-efficient number of FIR filters in the band-pass branch and

a low-pass filter (50) connected behind the adding stage (60) is provided and the decimator (51) connected behind the low-pass filter is provided for the threefold downsampling, wherein the output spectrum is derivable from the output of the decimator (51).

19. Transmitter and receiver according to claim 17 and 18 for the use for the transmission and representation of a whole frame by progressive representation or a frame transmitted by the interlacing method, wherein 432 lines are transmitted in the low-pass channel for the progressive representation or 216 lines are transmitted in the low-pass channel in the case of the interlacing method,

the signals of the lines 1 to 72 and 505 to 576, which are separated in the progressive method, and 72 lines corresponding to the lines 1 to 36 and 253 in the case of the interlacing method are transmitted in the band-pass channel and the lines are led together from both transmission channels by the letter-box method in the case of representation on a picture screen 16:9 and only the lines from the low-pass transmission channel are reproduced in the case of representation on a picture screen 4:3.

20. Transmitter according to claim 19, in which the low-pass filter (20) limits the spectrum to 432 L/PH (-3 dB) or to 216 L/PH (-3 dB) and the value is the cut-off frequency of the band filter (40).

21. Transmitter and receiver according to one of the claims 5 to 18, wherein the sampling circuits and the delay circuits are realised by storage circuits.

22. Transmitter and receiver according to claim 15 or transmitter according to claim 16, wherein the interpolator (34) or the low-pass filter (40) at the receiver end perform an amplification by N(M + N) and the interpolator (36) or the band-pass filter (41) in the band-pass branch perform an amplification by M(M + N).

**Revendications**

1. Procédé pour diviser en bandes un signal échantillonné dans un émetteur avec une fréquence d'échantillonnage de base, et le recombiner dans un récepteur, selon lequel

le spectre du signal échantillonné avec la fréquence d'échantillonnage de base est suréchantillonné et est réparti dans des bandes de fréquences, dans un premier dispositif de filtre dans l'émetteur,
les signaux, qui correspondent au spectre partiel formé à partir de la subdivision en bandes, sont tous échantillonnés dans des circuits d'échantillonnage et les valeurs d'échantillonnage respectives sont transmises par l'intermédiaire de canaux à bande limitée,
le signal reçu de chaque canal est suréchantillonné dans un circuit d'échantillonnage prévu sur le côté réception, avec une cadence d'échantillonnage identique à celle du sous-échantillonnage exécuté côté émission, et les spectres ainsi obtenus sont réunis par l'intermédiaire d'un second dispositif de filtre pour former le spectre original, auquel cas on prévoit les étapes opératoires suivantes :
le signal échantillonné côté émission avec la fréquence d'échantillonnage de base est suréchantillonné dans un autre circuit d'échantillonnage avec un facteur M.N, et
le spectre alors obtenu est divisé côté émission, dans le premier dispositif de filtre, en des composantes dissymétriques de fréquences, avec une partie passe-bas et une partie passe-bande TP/TH = M/N, M, N, $\in$ Z, M $\geq$ N, le rapport des largeurs de bande du filtre passe-bas au filtre passe-bande étant déterminé par les facteurs M et N, et M, N étant des éléments, qui peuvent être choisis d'une manière quelconque, de la quantité des nombres entiers Z (nombre de coefficients);
la composante de signal transmise dans la branche passe-bas est échantillonnée, côté émission, avec une cadence de suréchantillonnage N (M + N) et les valeurs d'échantillonnage sous-échantillonnées sont transmises;
la composante de signal transmise dans la branche passe-bande est échantillonnée côté émission avec une cadence de sous-échantillonnage M (M + N) et les valeurs d'échantillonnage sous-échantillonnées sont également transmises;
les signaux transmis sont suréchantillonnés côté réception dans un circuit d'échantillonnage avec une cadence d'échantillonnage, qui est égale à la cadence d'échantillonnage présente avant le sous-échantillonnage, dans la branche associée de la bande de fréquences de l'émetteur et est envoyée par l'intermédiaire d'un second dispositif de filtre aux entrées d'un circuit additionneur, et
le spectre additionné de sortie est sous-échantillonné dans un circuit d'échantillonnage disposé en aval, avec une fréquence d'échantillonnage M.N.

2. Procédé selon la revendication 1, selon lequel le signal suréchantillonné côté émission est soumis à un filtrage préalable avant la subdivision en bandes, par un filtre passe-bas possédant la fréquence limite

$$fg = \frac{1}{2T} \cdot \frac{1}{M \cdot N},$$

pour une amplification M.N,
et côté réception le spectre original récupéré par addition subit un post-filtrage dans un filtre passe-bande possédant la même fréquence limite, avant le sous-échantillonnage côté réception.

3. Procédé selon la revendication 1 ou 2, selon lequel la composante du signal dans la branche passe-bas est retardée, côté émission, par une ligne à retard, de

$$\frac{N}{2} \cdot (M + N)$$

- des cadences d'échantillonnage pour par exemple : M=3, N=1; filtre passe-bas 2 cadences - dont la branche passe-bande est retardée avec une ligne à retard de

$$\frac{M}{2} \cdot (M + N)$$

- des cadences d'échantillonnage pour par exemple : M=3, N=1; passe-bande 6 cadences -,

et côté réception est retardé d'une manière inverse dans les branches passe-bas et passe-bande, auquel cas le retard est exécuté côté émission dans la branche passe-bas et côté réception dans la branche passe-bande ou côté émission dans la branche passe-bande et côté réception dans la branche passe-bas.

4. Procédé selon la revendication 1 pour la transmission d'un signal de télévision à saut de ligne synthétique ou réel pour une représentation d'images avec un format 16:9 pour une compatibilité aval complète pour la représentation dans le format 4:3, selon lequel la subdivision du signal en bande, exécuté côté émission, s'effectue dans la direction verticale dans le rapport TP/BP = M/N = 3:1, et selon lequel l'image individuelle est subdivisée en trois sections selon le procédé letter-box (boîte aux lettres) et la section médiane de l'image est transmise par l'intermédiaire de la branche passe-bas et les deux sections latérales sont transmises par l'intermédiaire de la branche passe-bande, et

selon lequel en outre côté réception il est prévu une branche passe-bas ou une branche passe-bas et une branche passe-bande, ou bien, dans un récepteur usuel possédant un écran de télévision ayant pour format 4:3, ce dernier reçoit les signaux transmis de la branche passe-bas et les représente.

5. Émetteur pour la mise en oeuvre du procédé exécuté côté émission selon l'une des revendications précédentes, dans lequel il est prévu un interpolateur (10) en tant que circuit de manipulation pour le suréchantillonnage du signal d'entrée échantillonné avec la fréquence d'échantillonnage de base et dont la nouvelle cadence d'échantillonnage

$$6 = T_{ORI} \cdot \frac{1}{M \cdot N},$$

un premier dispositif de filtre pour subdiviser, en des bandes de fréquences, le signal suréchantillonné avec un filtre passe-bas (20) possédant la fréquence limite

$$FG + \frac{1}{2T} \cdot \frac{1}{N\,(M + N)},$$

un filtre passe-bande (21) situé dans la seconde branche et possédant la fréquence limite

$$fg = \frac{1}{2T} \cdot \frac{1}{N\,(M + N)},$$

un dispositif de décimation (31) pour sous-échantillonner la composante de signal transmise dans la branche passe-bas, avec une cadence d'échantillonnage N . (M + N), et un dispositif de décimation (33) pour sous-échantillonner la composante de signal transmise dans la branche passe-bande avec une cadence d'échantillonnage M . (M + N), le dispositif de décimation (33) étant synchronisé avec le dispositif de décimation (31).

6. Émetteur selon la revendication 5, dans lequel entre l'interpolateur (10) situé à l'entrée et le dispositif de filtre (20,21) est intercalé un filtre passe-bas d'interpolation (11) possédant une fréquence limite

$$fg = \frac{1}{2T} \cdot \frac{1}{M \cdot N}$$

amplification M . N.

7. Émetteur selon l'une des revendications 5 ou 6, dans lequel dans la branche passe-bas entre le filtre passe-bas (20) et le dispositif de décimation (31) est intercalée une ligne à retard (30) produisant un retard

$$\frac{N}{2} \cdot (M + N)$$

et/ou entre le filtre passe-bande (21) situé dans la seconde branche et le dispositif de décimation (33) branché en aval est intercalée une ligne à retard présentant le retard

$$\frac{M}{2} \cdot (M + N)$$

8. Récepteur pour la mise en oeuvre du procédé côté réception selon l'une des revendications 1 à 4, dans lequel dans la branche passe-bas sont prévus un interpolateur (34) pour le suréchantillonnage, possédant la cadence d'échantillonnage N.(M + N), et un filtre passe-bas (40) possédant la fréquence limite

$$fg = \frac{1}{2T} \cdot \frac{1}{N\,(M+N)},$$

et dans la branche passe-bande sont prévus un interpolateur (36) pour le suréchantillonnage avec la cadence d'échantillonnage M . (M + N) et un filtre passe-bande (41) branché en aval et possédant une fréquence limite

$$fg = \frac{1}{2T} \cdot \frac{1}{N\,(M+N)},$$

les sorties des filtres (40, 41) sont reliées à un étage additionneur (60), et
un dispositif de décimation (51) pour le sous-échantillonnage est raccordé à la sortie de l'étage additionneur (60), les interpolateurs (34, 36) étant synchronisés avec l'échantillonnage des dispositifs de décimation (31, 33) de l'émetteur et le dispositif de décimation (51) présent à la sortie et synchronisé avec l'interpolateur (10) à l'entrée de l'émetteur.

9. Récepteur selon la revendication 8, dans lequel entre l'interpolateur (34) situé dans la branche passe-bas et le filtre passe-bas (40) est inséré une ligne à retard produisant un retard

$$\frac{M}{2} \cdot (M+N)$$

et/ou entre l'interpolateur situé dans la branche passe-bande (36) et le filtre passe-bande (41), est intercalée une ligne à retard produisant un retard

$$\frac{N}{2} \cdot (M+N)$$

10. Récepteur selon la revendication 8 ou 9, dans lequel entre la sortie de l'étage additionneur (60) et le dispositif de décimation (51) est intercalé un filtre passe-bas possédant une fréquence limite

$$fg = \frac{1}{2T} \cdot \frac{1}{M \cdot N},$$

amplification M.N,

11. Émetteur et récepteur selon l'une des revendications 6 à 10, dans lesquels le filtre passe-bas et le filtre passe-bande (20, 21, 40, 41) sont réalisés sous la forme de filtres numériques FIR et avec des nombres pairs ou impairs de coefficients et que lors de la réalisation avec un nombre pair de coefficients, les lignes à retard sont supprimées.

12. Émetteur et récepteur selon la revendication 11, dans lesquels lors de la réalisation des filtres avec des nombres pairs de coefficients, les filtres passe-bas dans la branche passe-bas sont identiques et les filtres passe-bande dans la branche passe-bande diffèrent du facteur -1.

13. Émetteur et récepteur selon la revendication 12, dans lesquels le filtre passe-bas réalise la fonction de transfert

$$H_{(passe\text{-}bas)lf} = \frac{1}{2T} - \frac{1}{N\,(M+N)} = \text{-3dB}$$

et

$$H_{(passe\text{-}bas)lf} = \frac{1}{2T} \cdot \frac{1}{M \cdot N} \leq \text{-40 dB},$$

et

les fonctions de transfert du filtre passe-bande, en tant que modulation de la fonction de transfert du filtre passe-bas avec le sinus, satisfont aux exigences suivantes :

$$H_{(passe-bande)} = H_{(passe-bas)} \cdot 2 \cdot \sin(4\pi.fg.t).$$

14. Émetteur et récepteur selon la revendication 11, dans lesquels, dans le cas de la réalisation des filtres FIR avec des nombres impairs de coefficients pour la rotation de la trame de balayage de 180° dans l'une des deux branches, soit des lignes à retard (30,37) sont prévues dans la branche passe-bas située côté émission et dans la branche passe-bande située côté réception, soit les lignes à retard (32,35) sont prévues dans la branche passe-bande située côté émission et dans la branche passe-bas située côté réception.

15. Émetteur et récepteur selon la revendication 11 ou 14, dans lesquels le filtre passe-bas assume les fonctions de transfert

$$H_{(passe-bas)lf} = \frac{1}{2T} - \frac{1}{N(M+N)} = -3dB$$

et

$$H_{(passe-bas)lf} = \frac{1}{2T} \cdot \frac{1}{M \cdot N} \leq -40 \, dB,$$

et

les fonctions de transfert du filtre passe-bande en tant que modulation de la fonction de transfert du filtre passe-bas par le cosinus satisfont à l'exigence suivante :

$$H_{(passe-bande)} = H_{(passe-bas)} \cdot 2 \cdot \cos(4\pi \cdot fg \cdot t).$$

16. Émetteur selon la revendication 5, comportant un générateur de signaux vidéo, qui délivre à sa sortie un signal vidéo d'image large possédant un premier rapport de la largeur à la hauteur de l'image, et un premier nombre de lignes, le premier dispositif de filtre (11,20,21) pour la subdivision du signal vidéo de l'image large en des composantes du signal de fréquence locale avec de basses fréquences verticalement et des fréquences plus élevées verticalement comprend

> un filtre passe-bas (20) en tant que premier convertisseur du nombre de lignes pour réduire le nombre des lignes des composantes de signal de fréquence locale possédant de basses fréquences verticalement, un filtre passe-bande (21) en tant que convertisseur de nombres de lignes pour réduire le nombre de lignes des composantes de signal de fréquence locale comportant des fréquences supérieures verticalement, et un circuit pour réduire l'amplitude des composantes du signal de fréquence locale possédant des fréquences supérieures verticalement, de telle sorte que le niveau du signal des composantes du signal de fréquence locale- présentant des fréquences supérieures verticalement se situent dans la gamme de l'ultra-noir.

17. Émetteur selon la revendication 16 pour la subdivision aux bandes de fréquences dans le rapport TP/BP = 3:1 pour la transmission 16:9 compatible dans des systèmes PAL 4:3, dans lequel l'interpolateur (10) convertit le signal d'entrée échantillonné par le générateur de signaux vidéo avec une fréquence de cadence de base, un filtre passe-bas (11) branché en aval limite le spectre du signal, et après la subdivision ultérieure, exécutée moyennant l'utilisation de filtre FIR, le signal limité du point de vue spectral est envoyé, dans la branche formant filtre passe-bas, moyennant l'utilisation d'un filtre FIR ayant un nombre impair de coefficients, à une ligne à retard (30), qui retarde le signal de deux lignes, et dans la branche formant filtre passe-bande, des composantes passe-bande sont envoyées à une ligne à retard (32), qui retarde le signal de six lignes, et le sous-échantillonnage s'effectue quatre fois dans le dispositif de décimation (31) dans la branche formant filtre passe-bas et s'effectue douze fois dans le dispositif de décimation (33), dans la branche formant filtre passe-bande, les lignes à retard (30,32) de la branche passe-bas et de la branche passe-bande étant nécessaires uniquement dans le cas de l'utilisation de filtres FIR avec un nombre impair de coefficients du dispositif de filtre situé côté émission et du dispositif de filtre situé côté réception.

18. Récepteur selon la revendication 8, dans lequel sont prévus

> l'interpolateur (34) situé dans la branche passe-bas suréchantillonne le signal reçu avec une cadence d'échantillonnage quadruple,

l'interpolateur (36) situé dans la branche passe-bande suréchantillonne le signal arrivant avec une cadence d'échantillonnage douze fois plus élevée,

le filtre passe-bas (40), qui est disposé en arrière de l'interpolateur (34) de la branche passe-bas, est agencé sous la forme d'un filtre FIR,

le filtre passe-bande (41) disposé en aval de l'interpolateur (36) de la branche passe-bande est réalisé sous la forme d'un filtre FIR,

une ligne à retard (35), qui est nécessaire dans la branche passe-bas entre l'interpolateur (34) et le filtre passe-bande - (40) dans le cas d'un nombre impair de coefficients des filtres FIR (40, 41) et qui retarde le signal de six lignes,

une ligne à retard (37), qui est nécessaire dans la branche passe-bande entre l'interpolateur (36) et le filtre passe-bande (41) pour un nombre impair de coefficients des filtres FIR (40, 41) et qui retarde le signal de deux lignes, et

un filtre passe-bas (50) branché en aval de l'étage additionneur (60), et

le dispositif de décimation (51), qui est branché en aval du filtre passe-bas, est prévu pour le sous-échantillonnage triple, le spectre de sortie pouvant être prélevé sur la sortie du dispositif de décimation (51).

19. Émetteur et récepteur selon la revendication 17 et 18, pour leur utilisation pour la transmission et la représentation d'une image complète par représentation progressive ou d'une image transmise selon le procédé à saut de ligne, selon lequel

432 lignes sont transmises dans le canal passe-bas, dans le cas de la représentation progressive de l'image et 216 lignes sont transmises dans le canal passe-bas lors du procédé à saut de ligne,

dans le canal passe-bande, les signaux des lignes 1 à 72 et 505 à 576, qui sont séparées lors du procédé progressif, et 72 lignes correspondant aux lignes 1 à 36 et 253 à 288 dans le cas du procédé à saut de ligne, sont transmises et dans le cas de la représentation sur un écran 16:9 selon le procédé letter-box, les lignes sont réunies à partir des deux canaux de transmission, et, dans le cas de la représentation sur un écran 4:3, seules les lignes provenant du canal de transmission passe-bas sont représentées.

20. Émetteur selon la revendication 19, dans lequel le filtre passe-bas (20) limite le spectre à 432 L/PH (-3dB) ou à 216 L/PH (-3dB), et cette valeur est celle de la fréquence limite du filtre passe-bande (40).

21. Émetteur et récepteur selon l'une des revendications 5 à 18, dans lesquels les circuits d'échantillonnage et les circuits de retardement sont constitués par des circuits de mémoire.

22. Émetteur et récepteur selon la revendication 15 ou émetteur selon la revendication 16, dans lesquels, côté réception, l'interpolateur (34) ou le filtre passe-bas (40) exécute une amplification de N . (M + N) et l'interpolateur (36) ou le filtre passe-bande (41) dans la branche passe-bande exécute une amplification égale à M . (M + N).

Ü-Kanal 1

Ü-Kanal 2

in → 10 — 11

20 — 30 — 31 —)( — 34 — 35 — 40

21 — 32 — 33 —)( — 36 — 37 — 41

60 — 50 — 51 → out